# EUROPEAN PATENT SPECIFICATION

(11) **EP 3 752 730 B1**
(45) Date of publication and mention of the grant of the patent: **01.12.2021**
(21) Application number: 19705399.4
(22) Date of filing: 07.02.2019
(51) Int. Cl.: F02M 35/10, F02M 35/16, F02B 27/02

(54) **IMPROVED INTAKE SYSTEM FOR INTERNAL COMBUSTION ENGINE, INTERNAL COMBUSTION ENGINE AND THE MOTOR VEHICLE THEREOF**
VERBESSERTES ANSAUGSYSTEM FÜR VERBRENNUNGSMOTOREN, VERBRENNUNGSMOTOR UND KRAFTFAHRZEUG DAFÜR
SYSTÈME D'ADMISSION AMÉLIORÉ POUR MOTEUR À COMBUSTION INTERNE, MOTEUR À COMBUSTION INTERNE ET VÉHICULE À MOTEUR ASSOCIÉ

(30) Priority: 13.02.2018 IT 201800002615
(43) Date of publication of application: 23.12.2020
(73) Proprietor: Piaggio & C. S.P.A., 56025 Pontedera Pisa (IT)
(72) Inventor: CARAPELLUCCI, Carlo, 41011 Campogalliano, Modena (IT)
(74) Representative: Mitola, Marco
(86) International application number: PCT/IB2019/050997
(87) International publication number: WO 2019/159043

(56) References cited:
- EP-A2- 1 845 240
- DE-A1- 4 435 435
- US-A- 4 517 940
- US-A1- 2005 051 375
- US-A1- 2013 220 259

## Description

### SCOPE

The present invention concerns an improved intake system for an internal combustion engine, an internal combustion engine comprising said intake system and a motor vehicle thereof.

### STATE OF THE ART

As is well known, multi-cylinder internal combustion engines have problems in terms of filling efficiency of the cylinders, which significantly reduce the volumetric efficiency.

In effect, intake systems typically have a box (called an airbox) that collects the intake air and conveys it into the various intake ducts of the cylinders (trumpets). For example, US 4 517 940 A, DE 44 35 435 A1 and US 2013/220259 A1 describe various configurations of air intake systems. The fluid dynamics of the intake is extremely complex since the cylinders, in order to regulate the torque output, and thus the engine operation, as much as possible, do not work in phase. In other words, the combustion cycles (whether Diesel cycles or Otto cycle) of the various cylinders are out of phase.

Therefore, during the intake phase of one cylinder, the combustion phase of another cylinder may occur and so on.

The intake cycles of the various cylinders may thus mutually disturb each other, reducing the overall volumetric efficiency of the engine, right inside the filter box.

Moreover, the operating range, i.e. the speed range of internal combustion engines, may vary considerably, triggering at certain speeds resonance phenomena of the intake air masses that may improve or worsen the overall volumetric efficiency.

These phenomena are even more difficult to handle in the case of engines with a very wide speed range, such as for example in applications for motorcycles.

In order to improve the fluid dynamics of the intake, several solutions have been devised that substantially modify the length of the intake ducts according to the engine speed: in this way one may attempt to exploit the resonance phenomena to aid in filling the cylinders.

These solutions do not manage to optimize engine operation since they do not take into account the specific operating characteristics of each cylinder, mainly (but not exclusively) due to the engine architecture itself, i.e. the arrangement of the cylinders with respect to the airbox.

### PRESENTATION OF THE INVENTION

The need is therefore felt to resolve the drawbacks and limitations cited with reference to the known art.

Such requirement is met by an internal combustion engine intake system according to claim 1, by an internal combustion engine according to claim 14 and by a motor vehicle according to claim 15.

### DESCRIPTION OF THE DRAWINGS

Further features and advantages of the present invention will become more apparent from the following description of the preferred and non-limiting examples of embodiment thereof, wherein:

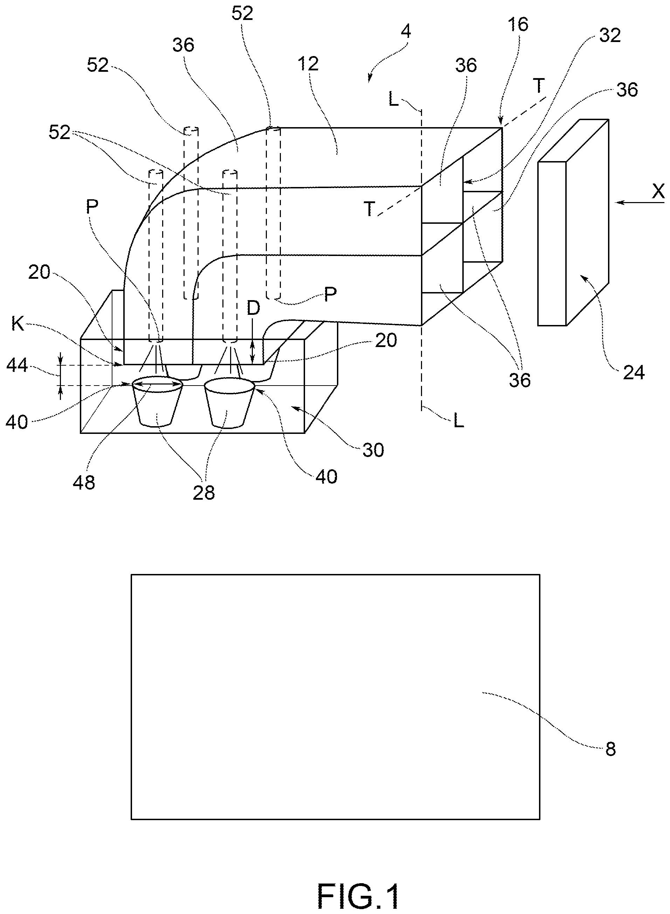

figure 1 shows an enlarged schematic view of an internal combustion system according to an embodiment of the present invention.

The elements or parts of elements in common between the embodiments described hereinafter will be indicated at the same numerical references.

### DETAILED DESCRIPTION

With reference to the aforesaid figures, a collective schematic view of an intake system for an internal combustion engine 8 according to the present invention is collectively indicated at 4.

For the purposes of the present invention, it should be specified that the term "internal combustion engine" should be considered in a broad sense, comprising any engine type or architecture, comprising in said category Otto cycle and Diesel cycle endothermic engines, as well as rotary engines (Wankel).

Moreover, the engine type is in no way linked to the type of vehicle whereon the engine may be mounted.

As mentioned, the present invention results in particular benefits to motorcycles, which are characterized by significant constraints in terms of size, weight and aesthetics, but it may also be applied to automobiles, industrial vehicles and motor vehicles in general.

The term "motorcycle" means is a motorized cycle with at least two wheels, i.e. a front wheel and a rear wheel. Such definition includes, therefore, also motorcycles having three wheels, including, for example, two paired steering wheels on the forecarriage and one drive wheel on the rear axle, but also motorcycles comprising a single steering wheel on the forecarriage and two drive wheels on the rear axle. Finally, so-called quadricycles are also included in the definition of a motorcycle, which have two wheels on the forecarriage and two wheels on the rear axle.

The intake system 4 for an internal combustion engine 8 comprises an air conveyance duct 12 extending from an air inlet opening 16 to an air outlet opening 20 delimiting a conveying volume.

Typically, upstream of the air inlet opening 16, the intake system 4 comprises at least one air filter 24; said air filter 24 may also be placed inside the air conveyance duct 12, or even downstream of the air outlet opening 20. In any case, the air filter 24 may also be omitted.

The intake system 4 further comprises 'n' intake trumpets 28, separated from each other, and facing said air outlet opening 20, with 'n' ≥2.

The intake trumpets 28, in a known way, preferably have a frusto-conical shape that tapers from the air outlet opening 20 toward the associated cylinder of the internal combustion engine 8. In other words, the trumpets have a smaller diameter mouth facing the respective cylinder. Preferably, each intake trumpet 28 is associated with a corresponding cylinder of the internal combustion engine 8, so as to feed the same. As seen, the number 'n' of intake trumpets 28, and thus the number of cylinders of the internal combustion engine 8, is greater than or equal to 2. This means that the intake system 4 of the present invention applies to any internal combustion engine 8 of the multi-cylinder type.

According to the invention, the air conveyance duct 12 comprises at least one internal partition wall 32 extending continuously along the air conveyance duct 12, so as to divide it internally into 'n' channels 36 which are fluidly separated from each other.

In other words, the internal partition wall 32 extends along the entire section between the air inlet opening 16 and the air outlet opening 20; in this way the 'n' channels 36 do not communicate and do not influence each other inside the air conveyance duct 12. The air and/or pressure wave exchanges between the 'n' channels may thus take place upstream of the air inlet opening 16 and/or downstream of the air outlet opening 20, at which each of the said 'n' channels 36 ends up facing a corresponding intake trumpet 28.

In particular, as better described hereinafter, the air/wave pressure exchanges between the 'n' ducts downstream of the air outlet opening 20 allow the intake flows in the various cylinders to be 'equalized', optimizing the overall volumetric efficiency of the internal combustion engine 8.

According to one embodiment, said 'n' channels 36 are delimited by at least one internal partition wall 32 and by the inside, i.e. the inner side wall, of said air conveyance duct 12.

As seen, preferably the at least one internal partition wall 32 divides the conveying volume into 'n' volumes of the channels 36.

Preferably, the internal combustion engine 8 comprises a number 'n' of cylinders equal to the number 'n' of channels, wherein each cylinder is equipped with its respective intake trumpet 28 and is fluidically fed by a respective channel 36.

According to one embodiment, the intake system 4 comprises an airbox 30 arranged so as to contain at least a part of the intake trumpets 28, at least a part of the air conveyance duct 12 and its partition wall(s) 32 in such a way that the air inlet opening 16 is positioned outside the same airbox 30. Substantially, the airbox 30 has a box shape wherein merges the air outlet opening 20, i.e. the air outlet mouth 20. Such outlet mouth 20 faces towards the mouth 40 of the trumpets 28 with larger diameter.

According to the invention, the air conveyance duct 12 and the at least one internal partition wall 32 are shaped in such a way that a gap 44 is defined between the air outlet opening 20 of the channels 36 and an air inlet edge 40 of the corresponding intake trumpets 28.

The air inlet edge 40 delimits the inlet section or mouth, inside each inlet trumpet 28, of the air flow coming from a corresponding channel 36 facing thereto.

Preferably, the intake trumpets 28 have an overall tapered shape, e.g. frusto-conical, moving from the side of the air outlet opening 20 towards the corresponding intake duct of the internal combustion engine 8.

The overall tapered shape does not necessarily have a circular cross-section, relative to a cross-section plane perpendicular to a predominant extension axis of the intake trumpets 28, but may also have different types of cross-section, comprising, for example, an elliptical-type geometry.

Moreover, it is also possible to provide intake trumpets 28 that have a geometry with a substantially constant cross-section, i.e. substantially free of tapered parts.

According to a possible embodiment, said gap 44 has a width comprised between 30% and 70% of the diameter 48 of the air inlet edge 40 of the corresponding intake trumpets 28. The diameter 48 must be understood in relation to a cross-section plane perpendicular to a predominant extension axis of the intake trumpets 28. In particular, the gap 44 is measured in height with respect to the inlet of the trumpets, or with respect to their inlet edge. The gap 44 can also be determined according to a radial direction, that is, as a diametrical difference between the mouth of the respective conveying duct and the mouth of the corresponding trumpet.

According to a possible embodiment, the intake trumpets 28 are connected to moving means, not illustrated, adapted to vary said gap 44 appropriately.

The variation of said gap 44 is preferably obtained as a function of the variation of the operating parameters of the internal combustion engine 8. Typically, the variation of said gap 44 varies according to the speed of the internal combustion engine 8, in order to optimize, by resonance phenomena of the intake air flows, the volumetric filling of the various cylinders of the same engine.

For example, the moving means are configured to eliminate substantially said gap 44, bringing the air inlet edge 40 into contact with said air outlet opening 20. By elimination it is also meant the achievement to few millimeters or tenths of millimeters, which substantially cancels the external dispersion in the passage of the air flow. If the gap 44 is eliminated, the air intake flows of adjacent channels 36 are prevented from affecting each other even after flowing out of the air outlet opening 20. The gap 44 may be substantially eliminated, for example, by bringing the air inlet edge 40 of the intake trumpets 28 in contact with a part of each corresponding channel 36 at the air outlet opening 20. Preferably, the contact between the components is damped by the interposition of at least one gasket which, in addition to reducing vibrations and noise, would also allow the air flow to be sealed.

It is also possible to configure the moving means in such a way as to eliminate said gap 44, bringing the air inlet edge 40 at least partially inside the channels 36.

According to a possible embodiment, the movement of said intake trumpets 28 is independent, so as to vary the 'n' gaps independently.

In other words, it is possible to vary the distance between each intake trumpet 28 and the corresponding channel 36 independently and separately. In this way it is possible to optimize the volumetric filling of each cylinder according to the specific and contingent operating conditions of the same cylinder, also taking into account parameters of a geometric nature, linked, for example, to the architecture and thus to the positioning of the duct inside the intake system 4. For example, it is possible to increase or decrease the gap 44 of a cylinder arranged on the forward-facing side and, conversely, to decrease or increase the gap 44 of a corresponding cylinder arranged on the opposite side, in an engine with a 'V' architecture.

According to a possible embodiment, at least one internal partition wall 32 divides the conveying volume into 'n' volumes of the channels 36, which are substantially identical to each other.

For example, it is possible to increase an air passage section of the channels 36 having smaller extension and decrease the air passage section of the channels having larger extension, said extension being the average length traveled in each channel 36 to pass from the air inlet opening 16 to the air outlet opening 20.

According to a possible embodiment, said at least one internal partition wall 32 comprises at least one moving element (not illustrated) connected to motor means (not illustrated) capable of modifying the volume of at least one of said 'n' channels 36.

The arrangement of the channels 36 is highly variable, and typically, but not exclusively, depends on the architecture of the internal combustion engine 8, i.e. the arrangement of the relevant cylinders.

For example, at least two of said channels 36 may be provided positioned side by side in a transverse direction T, perpendicular to a direction of flow X, i.e. the inlet direction, of the air through the air inlet opening 16.

It is also possible to provide for at least two of said channels 36 being positioned side by side in a longitudinal direction L, perpendicular to a direction of flow, i.e. incoming, of the air through the air inlet opening and in a longitudinal direction L.

For example (figure 1), the air conveyance duct 12 may be provided comprising four channels 36 arranged according to a square matrix scheme, along said transversal T and longitudinal L directions.

It is possible to provide for the channels 36 to convey only intake air or a mixture of air and fuel appropriately injected by fuel injection devices 52.

According to one embodiment, within each of said 'n' channels 36, a fuel injection device 52 is at least partially housed.

For the purposes of the present invention, the specific type of fuel injection device 52 which may, for example, be electronic, piezo-electric or similar, is not relevant.

Preferably, a fuel injection point P of the fuel injection devices 52 is arranged, within each channel 36, at a distance D from the air outlet opening 20 of not less than 20% of a diameter K of a cross-section of the channel 36 at the air outlet opening 20.

According to a possible embodiment, each fuel injection device 52 penetrates at least one channel 36.

For example, in the case wherein the channels 36 are at least partially overlapping, e.g. along said longitudinal direction L, each fuel injection device may pass through at least two channels 36, also overlapping along the same longitudinal direction L.

Fuel injection devices 52 may be arranged or better oriented in different ways within the respective channel 36; depending on a possible embodiment, fuel injection devices 52 are arranged in a direction substantially perpendicular to the air outlet opening 20 of each channel 36.

As may be appreciated from the foregoing, the present invention allows the drawbacks of the prior art to be overcome.

In particular, the subdivision of the duct into 'n' channels along the entire length of the same duct (i.e. from the air inlet opening to the air outlet opening) allows each channel to be calibrated according to the specific intake trumpet (and thus the relative cylinder) that supplies it, without the individual intake flows being able to affect each other, as long as the air does not escape from the outlet opening.

Thus, the presence of gaps allows a pressure exchange to be obtained at the inlet edges of adjacent trumpets that "equalizes" the intake flows in the various cylinders, optimizing the collective volumetric efficiency.

Due to the division between the various ducts, in the entire section between the air inlet opening and the air outlet opening, the premixing between the air and the fuel inside each of the ducts is not affected by the adjacent ducts.

The equalization and thus the recall of the intake to the trumpets is influenced and optimized by the resonances of the various ducts only after having passed the air outlet opening.

If necessary, under particular operating conditions, it is also possible to occlude the gaps so as to prevent interference between at least one duct and those adjacent thereto.

The arrangement of the injectors inside the fluidly separated ducts allows the injection spray to be better isolated and the mixing, and thus the titer, of the gas conveyed by each trumpet towards the respective cylinder to be controlled in an extremely precise way.

A person skilled in the art, in the object of satisfying contingent and specific requirements, may make numerous modifications and variations to the intake systems and to the engines within the scope of the invention as defined by the following claims.

## Claims

1. Intake system (4) for an internal combustion engine (8) comprising:
- an air conveyance duct (12) that extends from an air inlet opening (16) to an air outlet opening (20) delimiting a conveying volume,
- 'n' intake trumpets (28), separated from each other, and facing said air outlet opening (20), with 'n' ≥2, wherein
- the air conveyance duct (12) comprises at least one internal partition wall (32) which internally divides it into 'n' channels (36) fluidly separated from each other along the extent of the air conveyance duct (12), each of said 'n' channels (36), at the air outlet opening (20), facing a corresponding intake trumpet (28),
**characterized in that**
the air conveyance duct (12) and the at least one internal partition wall (32) are arranged so that between the air outlet opening (20) of the channels (36) and an air inlet edge (40) of the corresponding intake trumpets (28) a gap (44) is provided.

2. Intake system (4) for internal combustion engine (8) according to claim 1, wherein said 'n' channels (36) are delimited by the at least one internal partition wall (32) and by the inside of said air conveyance duct (12).

3. Intake system (4) for internal combustion engine (8) according to claim 1 or 2, wherein the at least one internal partition wall (32) divides the conveying volume into 'n' volumes of the channels (36), in particular said channels (36) are substantially equal to each other.

4. Intake system (4) for internal combustion engine (8) according to claim 1, 2 or 3, wherein said gap (44) has a width comprised between 30 and 70% of a diameter (48) of said air inlet edge (40) of the corresponding intake trumpets (28).

5. Intake system (4) for internal combustion engine (8) according to claim 1, 2, 3 or 4, wherein the intake trumpets (28) are connected to moving means configured to vary said gap (44).

6. Intake system (4) for internal combustion engine (8) according to claim 5, wherein the moving means are configured so as to cancel said gap (44), bringing the air inlet edge (40) in contact with said air outlet opening (20).

7. Intake system (4) for internal combustion engine (8) according to claim 5 or 6, wherein the moving means are configured so as to eliminate said gap (44), bringing the air inlet edge (40) at least partially inside the channels (36).

8. Intake system (4) for an internal combustion engine (8) according to claim 5, 6 or 7, wherein the movement of said intake trumpets (28) is independent, so as to vary the 'n' gaps (44) independently.

9. Intake system (4) for an internal combustion engine (8) according to any one of the previous claims, wherein said at least one internal partition wall (32) comprises at least one movable element connected to motor means adapted to modify the volume of at least one of said 'n' channels (36).

10. Intake system (4) for internal combustion engine (8) according to any one of the preceding claims, wherein at least two of said channels (36) are side by side in a transverse direction (T), perpendicular to an air flow direction at the air inlet opening (16), in particular wherein at least two of said channels (36) are side by side in a longitudinal direction (L), perpendicular to an air flow direction at the air inlet opening (16) and to the transverse direction (T), in particular four channels (36) arranged according to a square matrix pattern, along said transverse (T) and longitudinal (L) directions are provided.

11. Intake system (4) for internal combustion engine (8) according to any one of the preceding claims, wherein inside each of said 'n' channels (36) is housed, at least partially, a fuel injection device (52), in particular wherein a fuel injection point (P) of the fuel injection devices (52) is arranged, within each channel (36), at a distance (D) from the air outlet opening (20) not less than 20% of a diameter (48) of a section of the channel (36) at the air outlet opening (20), in particular wherein each fuel injection device (52) passes through at least one channel (36).

12. Intake system (4) for internal combustion engine (8) according to claim 11, wherein said fuel injection devices (52) are arranged in a direction substantially perpendicular to the outlet opening (20) of each channel (36).

13. Intake system (4) for internal combustion engine (8) according to any one of the previous claims, comprising an airbox (30) arranged so as to contain at least a part of the intake trumpets (28), at least a part of the air conveyance duct (12) and its partition wall/s (32) in such a way that the air inlet opening (16) is positioned outside the airbox (30).

14. Internal combustion engine (8) comprising an intake system (4) according to any one of the claims from 1 to 13, wherein said engine (8) comprises a number 'n' of cylinders equal to the number 'n' of channels (36), each cylinder having its respective intake trumpet (28) and being fed by a respective channel (36).

15. Motor vehicle comprising an intake system (4) according to any one of the claims from 1 to 13 and/or an engine (8) according to claim 14.

## Patentansprüche

1. Ansaugsystem (4) für einen Verbrennungsmotor (8), umfassend:
- einen Luftführungskanal (12), der sich von einer Lufteinlassöffnung (16) zu einer Luftauslassöffnung (20) erstreckt, die ein Fördervolumen begrenzt,
- 'n' Ansaugtrichter (28), die voneinander getrennt sind und der Luftauslassöffnung (20) zugewandt sind, mit 'n' = 2,
wobei der Luftführungskanal (12) zumindest eine innere Trennwand (32) umfasst, die ihn intern in 'n' Kanäle (36) unterteilt, die entlang der Erstreckung des Luftführungskanals (12) fluidisch voneinander getrennt sind, wobei jeder der 'n' Kanäle (36) an der Luftauslassöffnung (20) einem entsprechenden Ansaugtrichter (28) zugewandt ist,
**dadurch gekennzeichnet, dass** der Luftführungskanal (12) und die zumindest eine innere Trennwand (32) so angeordnet sind, dass zwischen der Luftauslassöffnung (20) der Kanäle (36) und einer Lufteinlasskante (40) der entsprechenden Ansaugtrichter (28) ein Spalt (44) bereitgestellt ist.

2. Ansaugsystem (4) für einen Verbrennungsmotor (8) nach Anspruch 1, wobei die 'n' Kanäle (36) durch die zumindest eine innere Trennwand (32) und durch die Innenseite des Luftführungskanals (12) begrenzt sind.

3. Ansaugsystem (4) für einen Verbrennungsmotor (8) nach Anspruch 1 oder 2, wobei die zumindest eine innere Trennwand (32) das Fördervolumen in 'n' Volumina der Kanäle (36) unterteilt, wobei insbesondere die Kanäle (36) im Wesentlichen einander gleich sind.

4. Ansaugsystem (4) für einen Verbrennungsmotor (8) nach Anspruch 1, 2 oder 3, wobei der Spalt (44) eine Breite aufweist, die zwischen 30 und 70 % eines Durchmessers (48) der Lufteinlasskante (40) der entsprechenden Ansaugtrichter (28) umfasst.

5. Ansaugsystem (4) für einen Verbrennungsmotor (8) nach Anspruch 1, 2, 3 oder 4, wobei die Ansaugtrichter (28) mit Bewegungsmitteln verbunden sind, die konfiguriert sind, den Spalt (44) zu variieren.

6. Ansaugsystem (4) für einen Verbrennungsmotor (8) nach Anspruch 5, wobei die Bewegungsmittel so konfiguriert sind, dass sie den Spalt (44) aufheben bzw. zurückziehen, wobei die Lufteinlasskante (40) in Kontakt mit der Luftauslassöffnung (20) gebracht wird.

7. Ansaugsystem (4) für einen Verbrennungsmotor (8) nach Anspruch 5 oder 6, wobei die Bewegungsmittel so konfiguriert sind, dass sie den Spalt (44) beseitigen, wobei die Lufteinlasskante (40) zumindest teilweise ins Innere der Kanäle (36) gebracht wird.

8. Ansaugsystem (4) für einen Verbrennungsmotor (8) nach Anspruch 5, 6 oder 7, wobei die Bewegung der Ansaugtrichter (28) unabhängig ist, um die 'n' Spalte (44) unabhängig zu variieren.

9. Ansaugsystem (4) für einen Verbrennungsmotor (8) nach einem der vorhergehenden Ansprüche, wobei die zumindest eine innere Trennwand (32) zumindest ein bewegliches Element umfasst, das mit Motormitteln verbunden ist, die angepasst ist, das Volumen von zumindest einem der 'n' Kanäle (36) zu modifizieren.

10. Ansaugsystem (4) für einen Verbrennungsmotor (8) nach einem der vorhergehenden Ansprüche, wobei zumindest zwei der Kanäle (36) Seite an Seite in einer Querrichtung (T) senkrecht zu einer Luftströmungsrichtung an der Lufteinlassöffnung (16) sind, insbesondere wobei zumindest zwei der Kanäle (36) Seite an Seite in einer Längsrichtung (L) senkrecht zu einer Luftströmungsrichtung an der Lufteinlassöffnung (16) und zu der Querrichtung (T) sind, insbesondere wobei vier Kanäle (36), die gemäß einem quadratischen Matrixmuster angeordnet sind, entlang der Quer- (T) und Längsrichtung (L) bereitgestellt sind.

11. Ansaugsystem (4) für einen Verbrennungsmotor (8) nach einem der vorhergehenden Ansprüche, wobei im Inneren jedes der 'n' Kanäle (36) zumindest teilweise eine Kraftstoffeinspritzvorrichtung (52) untergebracht ist, insbesondere wobei ein Kraftstoffeinspritzpunkt (P) der Kraftstoffeinspritzvorrichtungen (52) innerhalb jedes Kanals (36) in einem Abstand (D) von der Luftauslassöffnung (20) von nicht weniger als 20 % eines Durchmessers (48) eines Abschnitts des Kanals (36) an der Luftauslassöffnung (20) angeordnet ist, insbesondere wobei jede Kraftstoffeinspritzvorrichtung (52) durch zumindest einen Kanal (36) verläuft.

12. Ansaugsystem (4) für einen Verbrennungsmotor (8) nach Anspruch 11, wobei die Kraftstoffeinspritzvorrichtungen (52) in einer Richtung im Wesentlichen senkrecht zu der Auslassöffnung (20) jedes Kanals (36) angeordnet sind.

13. Ansaugsystem (4) für einen Verbrennungsmotor (8) nach einem der vorhergehenden Ansprüche, umfassend eine Airbox (30), die so angeordnet ist, dass sie zumindest einen Teil der Ansaugtrichter (28), zumindest einen Teil des Luftführungskanals (12) und seine Trennwand/Trennwände (32) derart enthält, dass die Lufteintrittsöffnung (16) außerhalb der Airbox (30) positioniert ist.

14. Verbrennungsmotor (8), umfassend ein Ansaugsystem (4) nach einem der Ansprüche 1 bis 13, wobei der Motor (8) eine Anzahl 'n' von Zylindern umfasst, die gleich der Anzahl 'n' von Kanälen (36) sind, wobei jeder Zylinder seinen jeweiligen Ansaugtrichter (28) aufweist und von einem jeweiligen Kanal (36) gespeist wird.

15. Kraftfahrzeug, umfassend ein Ansaugsystem (4) nach einem der Ansprüche 1 bis 13 und/oder einen Motor (8) nach Anspruch 14.

## Revendications

1. Système d'admission (4) pour un moteur à combustion interne (8), comprenant :
- un conduit de transport d'air (12) qui s'étend d'une ouverture d'entrée d'air (16) à une ouverture de sortie d'air (20) délimitant un volume de transport,
- 'n' cornets d'entrée (28) séparés les uns des autres et étant en regard de l'ouverture de sortie d'air (20), 'n' étant ≥2,
le conduit de transport d'air (12) comprenant au moins une paroi de séparation interne (32) qui le divise à l'intérieur en 'n' canaux (36) séparés en flux les uns des autres dans le sens de l'étendue du conduit de transport d'air (12), chacun des 'n' canaux (36) étant en regard, à l'ouverture de sortie d'air (20), d'un cornet d'admission (28) correspondant,
**caractérisé en ce que**
le conduit de transport d'air (12) et ladite au moins une paroi de séparation interne (32) sont agencés de façon que, entre l'ouverture de sortie d'air (20) des canaux (36) et un bord d'entrée (40) des cornets d'entrée (28) correspondants, un espace (44) est prévu.

2. Système d'admission (4) pour un moteur à combustion interne (8), selon la revendication 1, **caractérisé en ce que** les 'n' canaux (36) sont délimités par ladite au moins une paroi de séparation interne (32) et par le côté intérieur du conduit de transport d'air (12).

3. Système d'admission (4) pour un moteur à combustion interne (8), selon la revendication 1 ou 2, **caractérisé en ce que** ladite au moins une paroi de séparation interne (32) divise le volume de transport en 'n' volumes des canaux (32), plus particulièrement, les canaux (36) sont sensiblement égaux entre eux.

4. Système d'admission (4) pour un moteur à combustion interne (8), selon la revendication 1, 2 ou 3, **caractérisé en ce que** l'espace (44) a une largeur entre 30 et 70 % d'un diamètre (48) du bord d'entrée d'air (40) du cornet d'admission (28) correspondant.

5. Système d'admission (4) pour un moteur à combustion interne (8), selon la revendication 1, 2, 3 ou 4, **caractérisé en ce que** les cornets d'entrée (28) sont reliés à des moyens mobiles configurés pour varier l'espace (44).

6. Système d'admission (4) pour un moteur à combustion interne (8), selon la revendication 5, **caractérisé en ce que** les moyens mobiles sont configurés de façon à annuler l'espace (44) en mettant le bord d'entrée d'air (40) en contact avec l'ouverture de sortie d'air (20).

7. Système d'admission (4) pour un moteur à combustion interne (8), selon la revendication 5 ou 6, **caractérisé en ce que** les moyens mobiles sont configurés de façon à éliminer l'espace (44) en portant le bord d'entrée d'air (40) au moins partiellement à l'intérieur des canaux (36).

8. Système d'admission (4) pour un moteur à combustion interne (8), selon la revendication 5, 6 ou 7, **caractérisé en ce que** le déplacement des cornets d'entrée (28) est indépendant, de façon à varier les 'n' espaces (44) indépendamment les uns des autres.

9. Système d'admission (4) pour un moteur à combustion interne (8), selon l'une des revendications précédentes, **caractérisé en ce que** ladite au moins une paroi de séparation interne (32) comprend au moins un élément mobile relié à des moyens moteurs adaptés pour modifier le volume d'au moins un des 'n' canaux (36).

10. Système d'admission (4) pour un moteur à combustion interne (8), selon l'une des revendications précédentes, **caractérisé en ce qu'**au moins deux des canaux (36) sont l'un à côté de l'autre dans une direction transversale (T), perpendiculairement à une direction de flux d'air à l'ouverture d'entrée d'air (16), notamment **en ce qu'**au moins deux des canaux (36) sont l'un à côté de l'autre dans une direction de longueur (L), perpendiculaire à une direction de flux d'air à l'ouverture d'entrée d'air (16) et à la direction transversale (T), plus particulièrement, quatre canaux (36) sont prévus dans les directions transversale (T) et longitudinale (L), agencés selon un motif de matrice carré.

11. Système d'admission (4) pour un moteur à combustion interne (8), selon l'une des revendications précédentes, **caractérisé en ce que**, à l'intérieur de chacun des 'n' canaux (36), est logé, au moins partiellement, un dispositif d'injection de carburant (52), notamment **en ce qu'**un point d'injection de carburant (P) des dispositifs d'injection de carburant (52) est agencé, à l'intérieur de chaque canal (36), à une distance (D) de l'ouverture de sortie d'air (20) non moins que 20% d'un diamètre (48) d'une section du canal (36) à l'ouverture de sortie d'air (20), notamment **en ce que** chaque dispositif d'injection (52) passe par au moins un canal (36).

12. Système d'admission (4) pour un moteur à combustion interne (8), selon la revendication 11, **caractérisé en ce que** les dispositifs d'injection de carburant (52) sont agencés dans une direction sensiblement perpendiculaire à l'ouverture de sortie de chaque canal (36).

13. Système d'admission (4) pour un moteur à combustion interne (8), selon l'une des revendications précédentes, comprenant une boîte d'air (30) agencé de façon à contenir au moins une partie des cornets d'entrée (28), au moins une partie du conduit de transport d'air (12) et sa paroi ou ses parois de séparation (32) d'une façon telle que l'ouverture d'entrée d'air (16) soit positionnée à l'extérieur de la boîte d'air (30).

14. Moteur à combustion interne (8) comprenant un système d'admission (4) selon l'une des revendications 1 à 13, **caractérisé en ce que** le moteur (8) comprend un nombre 'n' de cylindres égal au nombre 'n' de canaux (36), chaque cylindre ayant son cornet d'admission (28) et étant alimenté par un canal (36) correspondant.

15. Véhicule à moteur comprenant un système d'admission (4) selon l'une des revendications 1 à 13 et/ou un moteur (8) selon la revendication 14.
